# EUROPEAN PATENT SPECIFICATION

(11) **EP 1 948 466 B1**
(45) Date of publication and mention of the grant of the patent: **07.06.2017**
(21) Application number: 06799836.9
(22) Date of filing: 05.10.2006
(51) Int. Cl.: B60L 1/00, H02J 1/14

(54) **A SYSTEM FOR CONTROLLING THE CURRENT SUPPLY OF A MOTOR VEHICLE**
SYSTEM ZUR STEUERUNG DER STROMVERSORGUNG EINES KRAFTFAHRZEUGS
SYSTÈME DE COMMANDE DE L'ALIMENTATION EN COURANT D'UN VÉHICULE À MOTEUR

(30) Priority: 28.10.2005 SE 0502387
(43) Date of publication of application: 30.07.2008
(73) Proprietor: Scania CV AB (publ), 151 87 Södertälje (SE)
(72) Inventor: MÅRTENSSON, Max, S-641 96 Katrineholm (SE)
(74) Representative: Scania CV AB
(86) International application number: PCT/SE2006/050376
(87) International publication number: WO 2007/050027

(56) References cited:
- EP-A2- 0 944 154
- EP-A2- 0 944 154
- US-A1- 2005 228 562
- US-A1- 2005 231 042
- US-B2- 6 664 662

## Description

### FIELD OF THE INVENTION AND PRIOR ART

The present invention relates to a system according to the preamble of claim 1 and a method according to the preamble of claim 6 for controlling the current supply of a motor vehicle. The invention also relates to a computer program comprising computer program code for implementing such a method, a computer program product comprising a data storage medium readable by an electronic control unit and halving such a computer program stored thereon, and an electronic control unit.

A motor vehicle is provided with a current source in the form of one or several electric batteries responsible for the current supply of the vehicle. The motor vehicle is often provided with a manually manoeuvrable operating member in the form of a main switch that has to be activated manually by the vehicle driver in order to provide supply of current to different vehicle components, such as for instance different control units of the vehicle, before the ignition of the vehicle can be activated. The main switch controls a disconnector, a so-called battery disconnector, which consists of a relay and which is manoeuvrable by means of the main switch to and fro between a switched-off position, in which the disconnector keeps the current source of the vehicle electrically disconnected from said vehicle components, and a switched-on position, in which the disconnector keeps the current source of the vehicle electrically connected to said vehicle components for supplying electric current to them.

In order to avoid that vital vehicle functions will get lost during driving due to an unintentional or erroneous switching off of the main switch of the vehicle, it is common to lock the battery disconnector in switched-on position as long as the driving engine of the vehicle is in operation. According to a conventional solution, this is accomplished by having the battery disconnector connected to an outlet of a generator driven by the driving engine, this outlet being alive as long as the generator is active so that electric current then is supplied to the battery disconnector and retains the battery disconnector in switched-on position irrespective of the position of the main switch. When the driving engine stops and the generator thereby becomes inactive, the supply of electric current from the generator to the battery disconnector ceases, whereupon the battery disconnector can be manoeuvred to switched-off position by switching off the main switch.

### OBJECT OF THE INVENTION

The object of the present invention is to achieve an alternative to the solution described above for retaining a battery disconnector in switched-on position.

### SUMMARY OF THE INVENTION

According to the invention, said object is achieved by means of a system having the features defined in claim 1 and a method having the features defined in claim 6.

The invention also relates to a computer program having the features defined in claim 9, a computer program product having the features defined in claim 12 and an electronic control unit having the features defined in claim 13.

### BRIEF DESCRIPTION OF THE DRAWINGS

The invention will in the following be more closely described by means of embodiment examples, with reference to the appended drawings, where:
- Fig 1: is an outline diagram of a system according to the present invention, and
- Fig 2: is an outline diagram of an electronic control unit for implementing a method according to the invention.

### DETAILED DESCRIPTION OF PREFERRED EMBODIMENTS

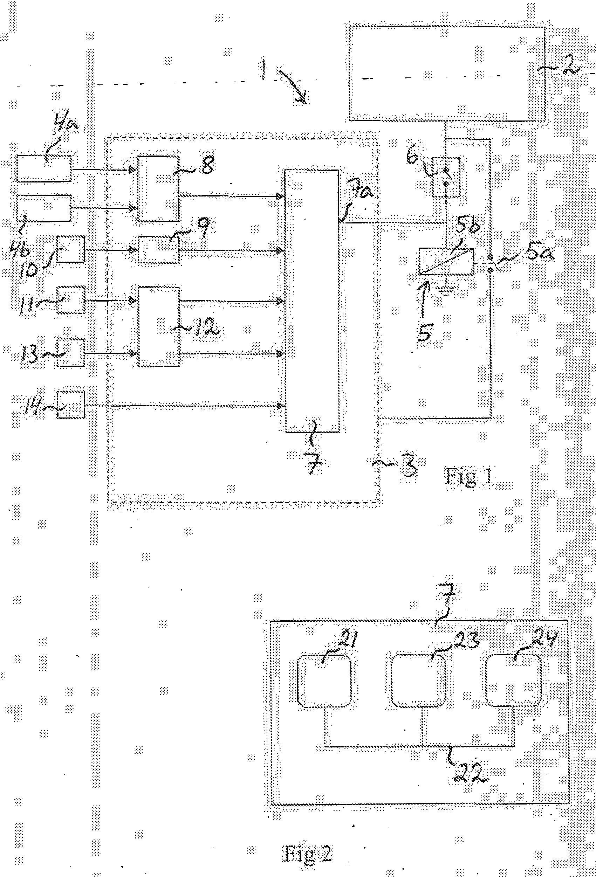

A system 1 according to the invention for controlling the current supply of a motor vehicle is schematically illustrated in Fig 1. The system is intended to be used in a vehicle that is provided with a current source 2 for supplying electric current to different vehicle components, which are schematically and jointly indicated by the block 3 in Fig 1. These vehicle components comprise different control units, lighting devices, refrigerators and various other components of the vehicle that are driven by means of electric current from the current source 2. The current source consists of one or several electric batteries, which are charged by means of one or several generators driven by the driving engine when the driving engine of the vehicle is in operation. A heavier motor vehicle, such as a bus, a lorry or a towing vehicle, is usually provided with two such generators, schematically indicated at 4a and 4b in Fig 1.

The inventive system 1 comprises a disconnector 5, also denominated battery disconnector, which is manoeuvrable between a switched-off position, in which the disconnector 5 is arranged to keep the current source 2 of the vehicle electrically disconnected from said components 3, and a switched-on position, in which the disconnector 5 is arranged to keep the current source of the vehicle electrically connected to said components 3 for supplying electric current to these components from the current source. The disconnector 5 is preferably a relay, which in a conventional manner comprises a breaker 5a and an electromagnet 5b, where the breaker 5a under the effect of the electromagnet 5b is closed when electric current is supplied through the electromagnet and returns to open position when the current supply through the electromagnet ceases.

The system 1 further comprises a manually manoeuvrable operating member 6, by means of which the disconnector 5 is manoeuvrable to and fro between switched-off position and switched-on position. The operating member 6 is preferably a breaker that is manoeuvrable to and fro between closed position, denominated ON position below, and open position, denominated OFF position below. In the ON position, the breaker 6 is arranged to conduct electric current from the current source 2 to the disconnector 5, to its electromagnet 5b to be precise. When the breaker 6 is in the OFF position, electric current is not conducted to the disconnector 5 via the breaker 6. The disconnector 5 is manoeuvred from switched-off position to switched-on position when the breaker 6 is closed and remains in switched-on position as long as the breaker 6 is kept closed. This breaker 6 constitutes the so-called main switch of the vehicle.

The system 1 further comprises an electronic control unit 7, which is adapted to activate a retention function under predetermined conditions, the control unit 7 being adapted, as long as the retention function is activated, to retain the disconnector 5 in switched-on position and thereby prevent the disconnector from being manoeuvred from switched-on position to switched-off position under the effect of the operating member 6. In the illustrated example, the control unit 7 is adapted, when the retention function is activated, to supply electric current via one of its outlets 7a to the disconnector 5, to its electromagnet 5b to be precise, so as to the thereby retain the disconnector in switched-on position. In the illustrated example, the disconnector 5 is retained in switched-on position as long as at least either of the control unit 7 and the operating member 6 allows electric current to be conducted to the disconnector 5. As long as the control unit 7 keeps the disconnector 5 energized, the disconnector will remain in switched-on position no matter whether the operating member 6 is in the ON position or the OFF position. When the vehicle is started up, the control unit 7 is energized together with the other vehicle components 3 when the operating member 6 by manual influence is made to manoeuvre the disconnector 5 from switched-off position to switched-on position. When the control unit 7 then registers that the predetermined conditions are fulfilled, it will activate the above-mentioned retention function and will thereby secure that the vehicle components 3 remain energized by the current source as long as this retention function is activated. When the retention function then, under predetermined conditions, is deactivated, the current supply to the disconnector 5 via the outlet 7a of the control unit ceases, whereupon the disconnector 5 in conventional manner can be manoeuvred from switched-on position to switched-off position under the effect of the operating member 6.

In this description and the subsequent claims, deactivation of the retention function implies that the retention function activated by the control unit is interrupted, i.e. that the retention function is brought from active state to inactive state.

The different conditions for activation and deactivation can easily be adapted to the vehicle type and the specific requirements of the vehicle type in question by reprogramming the control unit 7. In a vehicle that is not provided with any emergency stop function, the control unit 7 is suitably adapted to activate the retention function as soon as the driving engine of the vehicle is started and to maintain the retention function active as long as the driving engine is in operation. If the vehicle is provided with an emergency stop function, the retention function is to be deactivated when the emergency stop function is activated so as to not interfere with the emergency stop function.

That the driving engine of the vehicle is in operation can be detected and established in several different ways. A particularly advantageous way is to detect this via the generators 4a, 4b driven by the driving engine. A motor vehicle is often provided with two such generators, which are active and generate electric current when the driving engine is in operation. That at least one of these generators 4a, 4b is active will consequently indicate that the driving engine is in operation. By sensing the activity of both generators, redundant information as to whether the driving engine is in operation or not is obtained. The control unit 7 may be adapted to receive such information directly from the generators 4a, 4b or via a control unit 8 connected to the generators, such as the engine control unit of the vehicle.

In order to increase the security level of the system, the control unit 7 may also use information regarding the velocity of the vehicle as a parameter for controlling the activation and deactivation of the retention function, the retention function being activated if the velocity of the vehicle exceeds a predetermined threshold value, for instance in the magnitude of 1 km/h, and deactivation of the retention function only being allowed if the velocity does not exceed the threshold value. The velocity of the vehicle can be measured or established in several different ways. The control unit 7 is suitably adapted to receive information regarding the velocity of the vehicle from the speedometer control unit 9 of the vehicle but could also receive such information directly from a velocity sensor 10.

According to an embodiment of the invention, the control unit 7 is adapted to activate the retention function when the following conditions, optionally in combination with one or several further conditions, are simultaneously fulfilled:
- the control unit 7 receives information indicating that the driving engine of the vehicle is in operation or receives information indicating that the velocity of the vehicle exceeds a predetermined threshold value, and
- the control unit 7 receives, in case the vehicle is provided with an emergency stop function, information indicating that the emergency stop function is not activated.

If the inventive solution is used in a vehicle provided with an emergency stop function, which is common in buses, the control unit 7 is adapted to establish whether the emergency stop function is activated or receive information about that. The control unit 7 may be adapted to receive information regarding the activation state of the emergency stop function directly from an operating member 11 that is manually manoeuvrable for activation of the emergency stop function or from a control unit 12 of the vehicle connected to such an operating member, such as a brake control unit.

The control unit 7 is suitably adapted to deactivate the retention function when the following conditions, optionally in combination with one or several further conditions, are simultaneously ful-filled:
- the control unit 7 receives information indicating that the driving engine of the vehicle is not in operation,
- the control unit 7 receives information indicating that the velocity of the vehicle does not exceed the predetermined threshold value,
- the control unit 7 receives, in case the vehicle is provided with an emergency stop function, information indicating that the emergency stop function is not activated,
- the control unit 7 receives information indicating that the parking brake of the vehicle is set, and
- the control unit 7 receives information indicating that the ignition of the vehicle has been switched off.

When the above-mentioned conditions for deactivation of the retention function are applied, the control unit 7 is consequently adapted to establish whether the parking brake of the vehicle is set and whether the ignition of the vehicle has been switched off or receive information about that.

The control unit 7 may be adapted to receive information regarding the setting state of the parking brake directly from a sensor 13 arranged to sense setting and release of the parking brake or from a control unit 12 of the vehicle connected to such a sensor, such as a brake control unit. Setting and release of the parking brake is suitably sensed by means of a pressure sensor 13 arranged to sense the pressure in the air conduit to the parking brake cylinder. If the sensed pressure is below a predetermined threshold value, for instance in the magnitude of 0,8 bar, this will indicate that the parking brake is set. As an alternative, the setting and release of the parking brake could be sensed by means of a sensor arranged to sense the position of the operating member by means of which the driver of the vehicle controls the parking brake.

The control unit 7 may be adapted to receive information regarding the state of the ignition directly from the operating member 14, such as a conventional ignition switch, by means of which the driver of the vehicle controls switching on and switching off of the ignition, or from a control unit of the vehicle connected to such an operating member 14. In this case, the control unit 7 is with advantage adapted to deactivate the retention function with a certain time delay, for instance in the magnitude of 5 seconds, after the control unit 7 has received an indication that said operating member 14 has been manoeuvred for switching off the ignition. This time delay will secure that a switching off of the ignition ordered by means of the operating member 14 has had time to be accomplished before a manoeuvring of the disconnector 5 to switched-off position is allowed.

If the inventive system is used in a vehicle provided with an emergency stop function, the control unit 7 should be adapted to deactivate the retention function when the following conditions, optionally in combination with one or several further conditions, are simultaneously fulfilled:
- the control unit 7 receives information indicating that the velocity of the vehicle does not exceed the predetermined threshold value,
- the control unit 7 receives information indicating that the emergency stop function of the vehicle is activated, and
- the control unit 7 receives information indicating that the driving, engine of the vehicle is not in operation.
The emergency stop function is hereby allowed, when activated, to achieve an automatic switching off of the current supply of the vehicle in a conventional manner.

Lacking information regarding the velocity of the vehicle, the operating state of the driving engine or the setting of the parking brake, or erroneous information making it impossible to establish whether one of said deactivation conditions regarding the velocity of the vehicle, the operating state of the driving engine or the setting of the parking brake is fulfilled, is suitably treated by the control unit 7 as an indication that the deactivation condition in question is fulfilled. Hereby, a blocking of the possibility to turn off the current supply is avoided in case of malfunctions of the sensors and control units connected to the control unit 7 or in case of interference in the signal transfer from these to the control unit 7.

Computer program code for implementing a method according to the invention is suitably included in a computer program, which is loadable directly into the internal memory of a computer, such as the internal memory of the above-mentioned control unit 7. Such a computer program is suitably provided via a computer program product comprising a data storage medium readable by an electronic control unit, which data storage medium has the computer program stored thereon. Said data storage medium is for instance an optical data storage medium in the form of a CD-ROM disc, a DVD disc etc, a magnetic data storage medium in the form of a hard disk, a diskette, a cassette tape etc, or a memory of the type ROM, PROM, EPROM or EEPROM or a Flash memory.

The inventive computer program comprises computer program code for causing the computer, under predetermined conditions, for instance the above-indicated conditions, to activate a retention function that causes the above-mentioned disconnector 5 of a vehicle to be retained in switched-on position and thereby prevents the disconnector from being manoeuvred from switched-on position to switched-off position under the effect of a manually manoeuvrable operating member 6.

According to an embodiment of the invention, the computer program comprises computer program code for causing the computer:
- to establish whether the driving engine of the vehicle is in operation, preferably by establishing whether a generator driven by the driving engine is active, or receive information about that,
- to establish whether the velocity of the vehicle exceed a predetermined threshold value or receive information about that,
- in case the vehicle is provided with an emergency stop function, to establish whether the emergency stop function is activated or receive information about that, and
- to activate the retention function when the following conditions, optionally in combination with one or several further conditions, are simultaneously fulfilled:
   - the driving engine of the vehicle is in operation or the velocity of the vehicle exceeds the predetermined threshold value, and
   - the emergency stop function, in case the vehicle is provided with a such, is not activated.

Fig 2 very schematically illustrates an electronic control unit 7 comprising an execution means 21, such as a central processing unit (CPU), for executing computer software. The execution means 21 communicates with a memory 23, for instance of the type RAM, via a data bus 22. The control unit 7 also comprises a data storage medium 24, for instance in the form of a memory of the type ROM, PROM, EPROM or EEPROM or a Flash memory. The execution means 21 communicates with the data storage medium 24 via the data bus 22. A computer program comprising computer program code for implementing a method according to the invention is stored, on the data storage medium 24.

The invention is intended to be used in a motor vehicle, such as for instance a bus, a towing vehicle or a sorry.

The invention is of course not in any way restricted to the embodiments described above. On the contrary, many possibilities to modifications thereof should be apparent to a person with ordinary skill in the art without departing from the basic idea of the invention as defined in the appended claims.

## Claims

1. A system for controlling the current supply of a motor vehicle that is provided with a current source for supplying electric current to different vehicle components, which system comprises:
- a disconnector (5) that is manoeuvrable between a switched-off position, in which the disconnector (5) is arranged to keep the current source of the vehicle electrically disconnected from said components, and a switched-on position, in which the disconnector (5) is arranged to keep the current source of the vehicle electrically connected to said components for supplying electric current to them, and
- a manually manoeuvrable operating member (6), by means of which the disconnector (5) is manoeuvrable to and from between switched-off position and switched-on position,
the system (1) comprising an electronic control unit (7) that is adapted to activate a retention function under predetermined conditions by supplying an electric current to the disconnector, the control unit (7) being adapted, when the retention function is activated, to retain the disconnector (5) in switched-on position and thereby prevent the disconnector (5) from being manoeuvred from switched-on position to switched-off position under the effect of the operating member (6), **characterized in that** the control unit (7) is adapted to activate the retention function when the following conditions, optionally in combination with one or several further conditions, are simultaneously fulfilled:
- the control unit (7) receives information indicating that the driving engine of the vehicle is in operation or receives information indicating that the velocity of the vehicle exceeds a predetermined threshold value, and
the control unit (7) receives, in case the vehicle is provided with an emergency stop function, information indicating that the emergency stop function is not activated.

2. A system according to claim 1, **characterized in that** the disconnector (5) is a relay, and that the control unit (7) is adapted, when the retention function is activated, to retain the disconnector (5) in switched-on position by supplying electric current to the disconnector.

3. A system according to claim 2, **characterized in that** the operating member (6) is an electric switch, the operating member (6) being manoeuvrable between a closed ON position, in which electric current is supplied to the disconnector (5) via the operating member so that the disconnector thereby is retained in switched-on position, and an open OFF position, in which electric current is not supplied to the disconnector (5) via the operating member.

4. A system according to any of claims 1-3, **characterized in that** the control unit (7) is adapted to deactivate the retention function, and thereby allow the disconnector (5) to be manoeuvred from switched-on position to switched-off position under the effect of the operating member (6), when the following conditions, optionally in combination with one or several further conditions, are simultaneously fulfilled:
- the control unit (7) receives information indicating that the driving engine of the vehicle is not in operation,
- the control unit (7) receives information indicating that the velocity of the vehicle does not exceed the predetermined threshold value,
- the control unit (7) receives, in case the vehicle is provided with an emergency stop function, information indicating that the emergency stop function is not activated,
- the control unit (7) receives information indicating that the parking brake of the vehicle is set, and
- the control unit (7) receives information indicating that the ignition of the vehicle has been switched off.

5. A system according to any of claims 1-4 for controlling the current supply of a motor vehicle that is provided with an emergency stop funktion, **characterized in that** the control unit (7) is adapted to deactivate the retention function, and thereby allow the disconnector (5) to be manoeuvred from switched-on position to switched-off position under the effect of the operating member (6), when the following conditions, optionally in combination with one or several further conditions, are simultaneously fulfilled:
- the control unit (7) receives information indicating that the velocity of the vehicle does not exceed the predetermined threshold value,
- the control unit (7) receives information indicating that the emergency stop function of the vehicle is activated, and
- the control unit (7) receives information indicating that the driving engine of the vehicle is not in operation.

6. A method for controlling the current supply of a motor vehicle, the method comprising the steps of:
- supplying by a current source (2) electric current to different vehicle components,
- maneuvering a disconnector (5) between a switched-off position, in which the disconnector (5) keeps the current source of the vehicle electrically disconnected from said components, and a switched-on position, in which the disconnector (5) keeps the current source of the vehicle electrically connected to said components for supplying electric current to them, and
- manually maneuvering operating member (6), by means of which the disconnector (5) is manoeuvrable to and from between switched-off position and switched-on position, a retention function under predetermined conditions is activated by supplying an electric current to the disconnector by an electronic control unit (7) connected to the disconnector (5) so that the disconnector (5) under the effect of the control unit is retained in switched-on position and thereby prevented from being manoeuvred from switched-on position to switched-off position under the effect of the operating member (6), **characterized in that** the retention function is activated when the following conditions, optionally in combination with one or several further conditions, are simultaneously fulfilled:
- it is established that the driving engine of the vehicle is in operation or it is established that the velocity of the vehicle exceeds a predetermined threshold value, and
it is established, in case the vehicle is provided with an emergency stop function, that the emergency stop function is not activated.

7. A method according to claim 6, **characterized in that** the retention function is deactivated, so that the disconnector (5) thereby is allowed to be manoeuvred from switched-on position to switched-off position under the effect of the operating member (6), when the following conditions, optionally in combination with one or several further conditions, are simultaneously fulfilled:
- it is established that the driving engine of the vehicle is not in operation,
- it is established that the velocity of the vehicle does not exceed the predetermined threshold value,
- it is established, in case the vehicle is provided with an emergency stop function, that the emergency stop function is not activated,
- it is established that the parking brake of the vehicle is set, and
- it is established that the ignition of the vehicle has been switched off.

8. A method according to claim 6 - 7 for controlling the current supply of a motor vehicle that is provided with an emergency stop function, **characterized in that** the retention function is deactivated, so that the disconnector (5) thereby is allowed to be manoeuvred from switched-on position to switched-off position under the effect of the operating member (6), when the following conditions, optionally in combination with one or several further conditions, are simultaneously fulfilled:
- it is established that the velocity of the vehicle does not exceed the predetermined threshold value,
- it is established that the emergency stop function is activated, and
- it is established that the driving engine of the vehicle is not in operation.

9. A computer program loadable directly into the internal memory of a an electronic control unit (7), **characterized in that** the computer program comprises computer program code for causing the electronic control unit - to activate by supplying an electric current to a disconnector, under predetermined conditions, a retention function that causes the disconnector of a motor vehicle, which disconnector is manoeuvrable between a switched-on position, in which the disconnector keeps the current source of the vehicle electrically connected to different vehicle components for supplying electric current to them, and a switched-off position, in which the disconnector keeps the current source of the vehicle electrically disconnected from said components, to be retained in switched-on position and thereby prevents the disconnector from being manoeuvred from switched-on position to switched-off position under the effect of a manually manoeuvrable operating member,
- to establish whether the driving engine of the vehicle is in operation or receive information about that,
- to establish whether the velocity of the vehicle exceeds a predetermined threshold value or receive information about that,
- in case the vehicle is provided with an emergency stop function, to establish whether the emergency stop function is activated or receive information about that, and
- to activate the retention function when the following conditions, optionally in combination with one or several further conditions, are simultaneously fulfilled:
- the driving engine of the vehicle is in operation or the velocity of the vehicle exceeds the predetermined threshold value, and
- the emergency stop function, in case the vehicle is provided with a such, is not activated.

10. A computer program according to claim 9, **characterized in that** the computer program comprises computer program code for causing the electronic control unit (7)
- to establish whether the parking brake of the vehicle is set or receive information about that,
- to establish whether the ignition of the vehicle has been switched off or receive information about that, and
- to deactivate the retention function, so that the disconnector thereby is allowed to be manoeuvred from switched-on position to switched-off position under the effect of the operating member, when the following conditions, optionally in combination with one or several further conditions, are simultaneously fulfilled:
- the driving engine of the vehicle is not in operation,
- the velocity of the vehicle does not exceed the predetermined threshold value,
- the emergency stop function of the vehicle, in case the vehicle is provided with a such, is not activated,
- the parking brake of the vehicle is set, and
- the ignition of the vehicle has been switched off.

11. A computer program according to claim 9 or 10, **characterized in that** the computer program comprises computer program code for causing the electronic control unit to deactivate the retention function, so that the disconnector thereby is allowed to be manoeuvred from switched-on position to switched-off position under the effect of the operating member, when the following conditions, optionally in combination with one or several further conditions, are simultaneously fulfilled:
- the velocity of the vehicle does not exceed the predetermined threshold value,
- the emergency stop function of the vehicle is activated, and
- the driving engine of the vehicle is not in operation.

12. A computer program product comprising a data storage medium readable by an electronic control unit (7), a computer program according to any of claims 9-11 being stored on said data storage medium.

13. An electronic control unit (7) comprising an execution means (21), a memory (23) connected to the execution means and a data storage medium (24) connected to the execution means, a computer program according to any of claims 9-11 being stored on said data storage medium (24).

## Patentansprüche

1. System zum Steuern der Stromversorgung eines Kraftfahrzeuges, welches eine Stromquelle zum Versorgen verschiedener Fahrzeugkomponenten mit elektrischen Strom aufweist, wobei das System umfasst:
- einen Trennschalter (5), welcher zwischen einer ausgeschalteten Stellung, in welcher der Trennschalter angeordnet ist, um die Stromquelle des Fahrzeuges von den Komponenten getrennt zu halten, und einer eingeschalteten Stellung, in welcher der Trennschalter angeordnet ist, um die Stromquelle des Fahrzeuges mit den Komponenten für eine Stromversorgung derselben elektrisch verbinden, beweglich ist; und
- ein manuell bewegliches Bedienelement (6), durch welches der Trennschalter (5) zwischen der ausgeschalteten Stellung und der eingeschalteten Stellung hin und her beweglich ist, wobei das System (1) eine elektronische Steuereinheit (7) umfasst, die geeignet ist, eine Rückhaltefunktion unter vorbestimmten Bedingungen durch Versorgen des Trennschalters mit elektrischem Strom zu aktivieren, wobei die Steuereinheit (7) dazu geeignet ist, wenn die Rückhaltefunktion aktiviert ist, den Trennschalter (5) in der eingeschalteten Stellung zurückzuhalten und dadurch zu verhindern, dass der Trennschalter (5) aus der eingeschalteten Stellung in die ausgeschaltete Stellung unter der Wirkung des Bedienelementes (6) bewegt wird, **dadurch gekennzeichnet, dass** die Steuereinheit (7) dazu geeignet ist, die Rückhaltefunktion zu aktivieren, wenn die folgenden Bedingungen, optional in Kombination mit einer oder mehreren Bedingungen, gleichzeitig erfüllt sind:
- die Steuereinheit (7) empfängt Informationen, die erkennen lassen, dass der Antriebsmotor des Fahrzeuges in Betrieb ist, oder empfängt Informationen, die erkennen lassen, dass die Geschwindigkeit des Fahrzeuges einen vorbestimmten Sollwert übersteigt, und, in dem Fall, dass das Fahrzeug eine Nothaltefunktion aufweist, empfängt die Steuereinheit (7) Informationen die erkennen lassen, dass die Nothaltfunktion nicht aktiviert ist.

2. System nach Anspruch 1, **dadurch gekennzeichnet, dass** der Trennschalter (5) ein Relais ist und dass die Steuereinheit (7) dazu geeignet ist, wenn die Rückhaltefunktion aktiviert ist, den Trennschalter (5) in einer eingeschalteten Stellung durch Versorgen des Trennschalters mit elektrischem Strom zurückzuhalten.

3. System nach Anspruch 2, **dadurch gekennzeichnet, dass** das Bedienelement (6) ein elektrischer Schalter ist, wobei das Bedienelement (6) zwischen einer geschlossenen AN-Stellung, in welcher der Trennschalter (5) über das Bedienelement mit elektrischem Strom versorgt wird, so dass der Trennschalter in einer eingeschalteten Stellung zurückgehalten wird, und einer offenen AUS-Stellung bewegbar ist, in welcher der Trennschalter (5) über das Bedienelement nicht mit elektrischem Strom versorgt wird.

4. System nach einem der Ansprüche 1-3, **dadurch gekennzeichnet, dass** die Steuereinheit (7) zum Deaktivieren der Zurückhaltefunktion geeignet ist und dadurch dem Trennschalter (5) erlaubt, von einer eingeschalteten Stellung in eine ausgeschaltete Stellung unter der Wirkung des Bedienelementes (6) bewegt zu werden, wenn die folgenden Bedingungen, optional in Kombination mit einer oder mehreren Bedingungen, gleichzeitig erfüllt sind:
- die Steuereinheit (7) empfängt Informationen, die erkennen lassen, dass der Antriebsmotor des Fahrzeuges nicht in Betrieb ist,
- die Steuereinheit (7) empfängt Informationen, die erkennen lassen, dass die Geschwindigkeit des Fahrzeuges einen vorbestimmten Sollwert nicht übersteigt,
- die Steuereinheit (7) empfängt Informationen, die erkennen lassen, in dem Fall, dass das Fahrzeug eine Nothaltefunktion aufweist, dass die Nothaltefunktion nicht aktiviert ist,
- die Steuereinheit (7) empfängt Informationen, die erkennen lassen, dass die Handbremse des Fahrzeuges angezogen ist, und
- die Steuereinheit (7) empfängt Informationen, die erkennen lassen, dass die Zündung des Fahrzeuges ausgeschaltet wurde.

5. System nach einem der Ansprüche 1-4, zum Steuern der Stromversorgung eines Kraftfahrzeuges, welches eine Nothaltefunktion aufweist, **dadurch gekennzeichnet, dass** die Steuereinheit (7) dazu geeignet ist, die Zurückhaltefunktion zu deaktivieren, und dadurch dem Trennschalter (5) zu erlauben, unter der Wirkung des Bedienelementes (6) von einer eingeschalteten Stellung in eine ausgeschaltete Stellung bewegt zu werden, wenn die folgenden Bedingungen, optional in Kombination mit einer oder mehreren Bedingungen, gleichzeitig erfüllt sind:
- die Steuereinheit (7) empfängt Informationen, die erkennen lassen, dass die Geschwindigkeit des Fahrzeuges den vorbestimmten Sollwert nicht übersteigt,
- die Steuereinheit (7) empfängt Informationen, die erkennen lassen, dass die Nothaltefunktion aktiviert ist, und
- die Steuereinheit (7) empfängt Informationen, die erkennen lassen, dass der Antriebsmotor des Fahrzeuges nicht in Betrieb ist.

6. Verfahren zum Steuern der Stromversorgung eines Kraftfahrzeuges, wobei das Verfahren die Schritte umfasst:
- Versorgen verschiedener Fahrzeugkomponenten mit elektrischem Strom mittels einer Stromquelle (2),
- Bewegen eines Trennschalters (5) zwischen einer ausgeschalteten Stellung, in welcher der Trennschalter (5) die Stromquelle des Fahrzeuges von den Komponenten getrennt hält, und einer eingeschalteten Stellung, in welcher der Trennschalter die Stromquelle des Fahrzeuges mit den Komponenten zur Stromversorgung derselben elektrisch verbunden hält, und
- manuelles Bewegen eines Bedienelements (6) durch ein Mittel, durch welches der Trennschalter (5) zwischen der ausgeschalteten Stellung und der eingeschalteten Stellung hin und her beweglich ist, wobei eine Rückhaltefunktion unter vorbestimmten Bedingungen aktiviert wird durch Versorgen des Trennschalters mit elektrischen Strom durch eine elektronische Steuereinheit (7), welche mit dem Trennschalter (5) verbunden ist, so dass der Trennschalter (5) unter der Wirkung der Steuereinheit in der eingeschalteten Stellung zurückgehalten wird, und dadurch der Trennschalter (5) daran gehindert wird, unter der Wirkung des Bedienelementes (6) von einer eingeschalteten Stellung in eine ausgeschaltete Stellung bewegt zu werden, **dadurch gekennzeichnet, dass** die Rückhaltefunktion aktiviert wird, wenn die folgenden Bedingungen, optional in Kombination mit einer oder mehreren Bedingungen, gleichzeitig erfüllt sind:
- es wird bestimmt, dass der Antriebsmotor des Fahrzeuges in Betrieb ist, oder es wird bestimmt, dass die Geschwindigkeit des Fahrzeuges einen vorbestimmten Sollwert übersteigt, und es wird bestimmt, dass, in dem Fall, in dem das Fahrzeug eine Nothaltefunktion aufweist, die Nothaltefunktion nicht aktiviert ist.

7. Verfahren nach Anspruch 6, **dadurch gekennzeichnet, dass** die Rückhaltefunktion deaktiviert wird, so dass dem Trennschalter (5) erlaubt wird, unter der Wirkung des Bedienelementes (6) von einer eingeschalteten Stellung in eine ausgeschaltete Stellung bewegt zu werden, wenn die folgenden Bedingungen, optional in Kombination mit einer oder mehreren Bedingungen, gleichzeitig erfüllt sind:
- es wird bestimmt, dass der Antriebsmotor des Fahrzeuges nicht in Betrieb ist,
- es wird bestimmt, dass die Geschwindigkeit des Fahrzeuges den vorbestimmten Sollwert nicht übersteigt,
- es wird bestimmt, dass, in dem Fall, in dem das Fahrzeug eine Nothaltefunktion aufweist, die Nothaltfunktion nicht aktiviert ist.
- es wird bestimmt, dass die Handbremse des Fahrzeuges angezogen ist, und
- es wird bestimmt, dass die Zündung des Fahrzeuges ausgeschaltet wurde.

8. Verfahren nach einem der Ansprüche 6-7 zum Steuern der Stromversorgung eines Kraftfahrzeuges, welches eine Nothaltefunktion aufweist, **dadurch gekennzeichnet, dass** die Rückhaltefunktion deaktiviert wird, so dass dem Trennschalter (5) dadurch erlaubt wird, sich von einer eingeschalteten Stellung in eine ausgeschaltete Stellung unter der Wirkung des Bedienelementes (6) zu bewegen, wenn die folgenden Bedingungen, optional in Kombination mit einer oder mehreren Bedingungen, gleichzeitig erfüllt sind:
- es wird bestimmt, dass die Geschwindigkeit des Fahrzeuges den vorbestimmten Sollwert nicht übersteigt,
- es wird bestimmt, dass die Nothaltfunktion aktiviert ist, und
- es wird bestimmt, dass der Antriebsmotor des Fahrzeuges nicht in Betrieb ist.

9. Computerprogramm, welches direkt in einen internen Speicher einer elektrischen Steuereinheit (7) ladbar ist, **dadurch gekennzeichnet, dass** das Computerprogramm einem Computerprogrammcode umfasst, welcher die elektronische Steuereinheit veranlasst,
- unter vorbestimmten Bedingungen durch Versorgen des Trennschalters mit elektrischem Strom eine Rückhaltefunktion zu aktivieren, welche den Trennschalter des Kraftfahrzeuges, welcher zwischen einer eingeschalteten Stellung, in welcher der Trennschalter die Stromquelle des Fahrzeuges zu verschiedenen Fahrzeugkomponenten elektrisch verbunden hält, um diese mit Strom zu versorgen, und einer ausgeschalteten Stellung, in welcher der Trennschalter die Stromquelle des Fahrzeuges von den Komponenten getrennt hält, veranlasst, in der eingeschalteten Stellung zu verbleiben und dadurch den Trennschalter daran hindert, unter der Wirkung des manuell bewegbaren Bedienelementes von einer eingeschalteten Stellung in eine ausgeschaltete Stellung bewegt zu werden,
- zu bestimmen, ob der Antriebsmotor des Fahrzeuges in Betrieb ist oder ob Informationen darüber empfangen werden,
- zu bestimmen, ob die Geschwindigkeit des Fahrzeuges einen vorbestimmten Sollwert übersteigt, oder Informationen darüber empfangen werden,
- im Fall, dass das Fahrzeug eine Nothaltefunktion aufweist, zu bestimmen, ob die Nothaltefunktion aktiviert ist oder Informationen darüber empfangen werden, und
- die Rückhaltefunktion zu aktivieren, wenn die folgenden Bedingungen, optional in Kombination mit einer oder mehreren Bedingungen, gleichzeitig erfüllt sind:
- der Antriebsmotor des Fahrzeuges ist in Betrieb oder die Geschwindigkeit des Fahrzeuges übersteigt den vorbestimmten Sollwert, und
- die Nothaltefunktion, in dem Fall, in dem das Fahrzeug eine solche aufweist, ist nicht aktiviert.

10. Computerprogramm nach Anspruch 9, **dadurch gekennzeichnet, dass** das Computerprogramm einen Computerprogrammcode umfasst, welcher die elektronische Steuereinheit (7) veranlasst:
- zu bestimmen, ob die Handbremse des Fahrzeuges angezogen ist oder ob Informationen darüber empfangen werden,
- zu bestimmen, ob die Zündung des Fahrzeuges ausgeschaltet wurde oder ob Informationen darüber empfangen werden,
- die Rückhaltefunktion zu deaktivieren, so dass dem Trennschalter hierdurch erlaubt wird, sich von der eingeschalteten Stellung in die ausgeschaltete Stellung unter der Wirkung des Bedienelementes zu bewegen, wenn die folgenden Bedingungen, optional in Kombination mit einer oder mehreren Bedingungen, gleichzeitig erfüllt sind:
- der Antriebsmotor des Fahrzeuges ist nicht in Betrieb,
- die Geschwindigkeit des Fahrzeuges übersteigt nicht den vorbestimmten Sollwert, und
- die Nothaltefunktion, in dem Fall, in dem das Fahrzeug eine solche aufweist, ist nicht aktiviert,
- die Handbremse des Fahrzeuges ist angezogen, und
- die Zündung des Fahrzeuges wurde abgeschaltet.

11. Computerprogram nach Anspruch 9 oder 10, **dadurch gekennzeichnet, dass** das Computerprogramm einen Computerprogrammcode umfasst, welcher die elektronische Steuereinheit veranlasst, die Rückhaltefunktion zu deaktivieren, so dass dem Trennschalter hierdurch erlaubt wird, sich von einer eingeschalteten Stellung in eine ausgeschaltete Stellung unter der Wirkung des Bedienelementes zu bewegen, wenn die folgenden Bedingungen, optional in Kombination mit einer oder mehreren Bedingungen, gleichzeitig erfüllt sind:
- die Geschwindigkeit des Fahrzeuges übersteigt nicht den vorbestimmten Sollwert,
- die Nothaltefunktion des Fahrzeuges ist aktiviert, und
- der Antriebsmotor des Fahrzeuges ist nicht in Betrieb.

12. Computerprogrammprodukt, umfassend ein Datenspeichermedium, welches von einer elektronischen Steuereinheit (7) lesbar ist, ein Computerprogramm nach einem der Ansprüche 9-11, welcher auf dem Datenspeichermedium gespeichert ist.

13. Elektronische Steuereinheit (7), umfassend ein Ausführungsmittel (21), einen Speicher (23), welcher mit dem Ausführungsmittel verbunden ist, und ein Datenspeichermedium (24), welches mit dem Ausführungsmittel verbunden ist, ein Computerprogramm nach einem der Ansprüche 9-11, welches in dem Datenspeichermedium (24) gespeichert ist.

## Revendications

1. Système pour commander l'alimentation en courant d'un véhicule à moteur qui est muni d'une source de courant pour délivrer un courant électrique à différents composants de véhicule, ce système comprenant :
- un dispositif de déconnexion (5) qui peut être manoeuvré entre une position de commutation hors service, dans laquelle le dispositif de déconnexion (5) est agencé de façon à maintenir la source de courant du véhicule électriquement déconnectée desdits composants, et une position de commutation en service, dans laquelle le dispositif de déconnexion (5) est agencé de façon à maintenir la source de courant du véhicule électriquement connectée auxdits composants afin de délivrer un courant électrique à ceux-ci, et
- un élément d'actionnement pouvant être manoeuvré manuellement (6), à l'aide duquel le dispositif de déconnexion (5) peut être manoeuvré vers et à partir de la position de commutation hors service et de la position de commutation en service,
le système (1) comprenant une unité de commande électronique (7) qui est adaptée de façon à activer une fonction de rétention dans des conditions prédéterminées par la délivrance d'un courant électrique au dispositif de déconnexion, l'unité de commande (7) étant adaptée, lorsque la fonction de rétention est activée, de façon à maintenir le dispositif de déconnexion (5) dans la position de commutation en service, et de façon à empêcher ainsi le dispositif de déconnexion (5) de pouvoir être manoeuvré de la position de commutation en service à la position de commutation hors service sous l'effet de l'élément d'actionnement (6), **caractérisé en ce que** l'unité de commande (7) est adaptée de façon à activer la fonction de rétention lorsque les conditions suivantes, de façon optionnelle en combinaison avec une ou plusieurs autres conditions, sont remplies simultanément :
- l'unité de commande (7) reçoit une information indiquant que le moteur d'entraînement du véhicule est en fonctionnement ou reçoit une information indiquant que la vitesse du véhicule dépasse une valeur de seuil prédéterminée, et
l'unité de commande (7) reçoit, dans le cas où le véhicule est muni d'une fonction d'arrêt d'urgence, une information indiquant que la fonction d'arrêt d'urgence n'est pas activée.

2. Système selon la revendication 1, **caractérisé en ce que** le dispositif de déconnexion (5) est un relais, et **en ce que** l'unité de commande (7) est adapté, lorsque la fonction de rétention est activée, de façon à maintenir le dispositif de déconnexion (5) dans la position de commutation en service par la délivrance de courant électrique au dispositif de déconnexion.

3. Système selon la revendication 2, **caractérisé en ce que** l'élément d'actionnement (6) est un commutateur électrique, l'élément d'actionnement (6) pouvant être manoeuvré entre une position EN SERVICE fermée, dans laquelle un courant électrique est délivré au dispositif de déconnexion (5) par l'intermédiaire de l'élément d'actionnement de telle sorte que le dispositif de déconnexion soit ainsi maintenu dans la position de commutation en service, et une position HORS SERVICE ouverte, dans laque un courant électrique n'est pas délivré au dispositif de déconnexion (5) par l'intermédiaire de l'élément d'actionnement.

4. Système selon l'une quelconque des revendications 1 à 3, **caractérisé en ce que** l'unité de commande (7) est adaptée de façon à désactiver la fonction de rétention, et à permettre ainsi au dispositif de déconnexion (5) d'être manoeuvré de la position de commutation en service à la position de commutation hors service sous l'effet de l'élément d'actionnement (6), lorsque les conditions suivantes, de façon optionnelle en combinaison avec une ou plusieurs autres conditions, sont remplies simultanément :
- l'unité de commande (7) reçoit une information indiquant que le moteur d'entraînement du véhicule n'est pas en fonctionnement,
- l'unité de commande (7) reçoit une information indiquant que la vitesse du véhicule ne dépasse pas la valeur de seuil prédéterminée,
- l'unité de commande (7) reçoit, dans le cas où le véhicule est muni d'une fonction d'arrêt d'urgence, une information indiquant que la fonction d'arrêt d'urgence n'est pas activée,
- l'unité de commande (7) reçoit une information indiquant que le frein de stationnement du véhicule est établi, et
- l'unité de commande (7) reçoit une information indiquant que l'allumage du moteur a été commuté hors service.

5. Système selon l'une quelconque des revendications 1 à 4 pour commander l'alimentation en courant d'un véhicule à moteur qui est muni d'une fonction d'arrêt d'urgence, **caractérisé en ce que** l'unité de commande (7) est adaptée de façon à désactiver la fonction de rétention, et de façon à permettre ainsi au dispositif de déconnexion (5) d'être manoeuvré de la position de commutation en service à la position de commutation hors service sous l'effet de l'élément d'actionnement (6), lorsque les conditions suivantes, de façon optionnelle en combinaison avec une ou plusieurs autres conditions, sont remplies simultanément :
- l'unité de commande (7) reçoit une information indiquant que la vitesse du véhicule ne dépasse pas la valeur de seuil prédéterminée,
- l'unité de commande (7) reçoit une information indiquant que la fonction d'arrêt d'urgence du véhicule est activée, et
- l'unité de commande (7) reçoit une information indiquant que le moteur d'entraînement du véhicule n'est pas en fonctionnement.

6. Procédé pour commander l'alimentation en courant d'un véhicule à moteur, le procédé comprenant les étapes consistant à :
- délivrer à l'aide d'une source de courant (2) un courant électrique à différents composants de véhicule,
- manoeuvrer un dispositif de déconnexion (5) entre une position de commutation hors service, dans laquelle le dispositif de déconnexion (5) maintient la source de courant du véhicule électriquement déconnectée desdits composants, et une position de commutation en service, dans laquelle le dispositif de déconnexion (5) maintient la source de courant du véhicule électriquement connectée auxdits composants afin de délivrer un courant électrique à ceux-ci, et
- manoeuvrer manuellement un élément d'actionnement (6), à l'aide duquel le dispositif de déconnexion (5) peut être manoeuvré vers et à partir de la position de commutation hors service et de la position de commutation en service, une fonction de rétention dans des conditions prédéterminées étant activée par la délivrance d'un courant électrique au dispositif de déconnexion par une unité de commande électronique (7) connectée au dispositif de déconnexion (5) de telle sorte que le dispositif de déconnexion (5), sous l'effet de l'unité de commande, soit maintenu dans la position de commutation en service, et, par conséquent, empêché d'être manoeuvré de la position de commutation en service à la position de commutation hors service sous l'effet de l'élément d'actionnement (6), **caractérisé en ce que** la fonction de rétention est activée lorsque les conditions suivantes, de façon optionnelle en combinaison avec une ou plusieurs autres conditions, sont remplies simultanément :
- il est établi que le moteur d'entraînement du véhicule est en fonctionnement ou il est établi que la vitesse du véhicule dépasse une valeur de seuil prédéterminée, et
il est établi, dans le cas où le véhicule est muni d'une fonction d'arrêt d'urgence, que la fonction d'arrêt d'urgence n'est pas activée.

7. Procédé selon la revendication 6, **caractérisé en ce que** la fonction de rétention est désactivée, de telle sorte que dispositif de déconnexion (5) soit ainsi autorisé à être manoeuvré de la position de commutation en service à la position de commutation hors service sous l'effet de l'élément d'actionnement (6), lorsque les conditions suivantes, de façon optionnelle en combinaison avec une ou plusieurs autres conditions, sont remplies simultanément :
- il est établi que le moteur d'entraînement du véhicule n'est pas en fonctionnement,
- il est établi que la vitesse du véhicule ne dépasse pas la valeur de seuil prédéterminée,
- il est établi, dans le cas où le véhicule est muni d'une fonction d'arrêt d'urgence, que la fonction d'arrêt d'urgence n'est pas activée,
- il est établi que le frein de stationnement du véhicule est établi, et
- il est établi que l'allumage du véhicule a été commuté hors service.

8. Procédé selon la revendication 6 ou 7 pour commander l'alimentation en courant d'un véhicule à moteur qui est muni d'une fonction d'arrêt d'urgence, **caractérisé en ce que** la fonction de rétention est désactivée, de telle sorte que le dispositif de déconnexion (5) soit ainsi autorisé à être manoeuvré de la position de commutation en service à la position de commutation hors service sous l'effet de l'élément d'actionnement (6), lorsque les conditions suivantes, de façon optionnelle en combinaison avec une ou plusieurs autres conditions, sont remplies simultanément :
- il est établi que la vitesse du véhicule ne dépasse pas la valeur de seuil prédéterminée,
- il est établi que la fonction d'arrêt d'urgence du véhicule est activée, et
- il est établi que le moteur d'entraînement du véhicule n'est pas en fonctionnement.

9. Programme informatique pouvant être chargé directement dans la mémoire interne d'une unité de commande électronique (7), **caractérisé en ce que** le programme informatique comprend un code de programme informatique pour amener l'unité de commande électronique à :
- activer, par la délivrance d'un courant électrique à un dispositif de déconnexion, dans des conditions prédéterminées, une fonction de rétention qui amène le dispositif de déconnexion d'un véhicule à moteur, ce dispositif de déconnexion pouvant être manoeuvré entre une position de commutation en service, dans laquelle le dispositif de déconnexion maintient la source de courant du véhicule électriquement connectée à différents composants de véhicule pour délivrer un courant électrique à ceux-ci, et une position de commutation hors service, dans laquelle le dispositif de déconnexion maintient la source de courant du véhicule électriquement déconnectée desdits composants, à être maintenu dans la position de commutation en service, et qui empêche par conséquent le dispositif de déconnexion d'être manoeuvré de la position de commutation en service à la position de commutation hors service sous l'effet d'un élément d'actionnement pouvant être manoeuvré manuellement,
- établir si le moteur d'entraînement du véhicule est ou non en fonctionnement ou recevoir une information à ce sujet,
- établir si la vitesse du véhicule dépasse ou non une valeur de seuil prédéterminée ou recevoir une information à ce sujet,
- dans le cas où le véhicule est muni d'une fonction d'arrêt d'urgence, établir si la fonction d'arrêt d'urgence est ou non activée ou recevoir une information à ce sujet, et
- activer la fonction de rétention lorsque les conditions suivantes, de façon optionnelle en combinaison avec une ou plusieurs autres conditions, sont remplies simultanément :
- le moteur d'entraînement du véhicule est en fonctionnement ou la vitesse du véhicule dépasse la valeur de seuil prédéterminée, et
- la fonction d'arrêt d'urgence, dans le cas où le véhicule est muni de celle-ci, n'est pas activée

10. Programme informatique selon la revendication 9, **caractérisé en ce que** le programme informatique comprend un code de programme informatique pour amener l'unité de commande électronique (7) à :
- établir si le frein de stationnement du véhicule est ou non établi ou recevoir une information à ce sujet,
- établir si l'allumage du véhicule a été ou non commuté hors service ou recevoir une information à ce sujet, et
- désactiver la fonction de rétention, de telle sorte que dispositif de déconnexion soit ainsi autorisé à être manoeuvré de la position de commutation en service à la position de commutation hors service sous l'effet de l'élément d'actionnement, lorsque les conditions suivantes, de façon optionnelle en combinaison avec une ou plusieurs autres conditions, sont remplies simultanément :
- le moteur d'entraînement du véhicule n'est pas en fonctionnement,
- la vitesse du véhicule ne dépasse pas la valeur de seuil prédéterminée,
- la fonction d'arrêt d'urgence du véhicule, dans le cas où le véhicule est muni de celle-ci, n'est pas activée,
- le frein de stationnement du véhicule est établi, et
- l'allumage du véhicule a été commuté hors service.

11. Programme informatique selon la revendication 9 ou 10, **caractérisé en ce que** le programme informatique comprend un code de programme informatique pour amener l'unité de commande électronique à désactiver la fonction de rétention, de telle sorte que le dispositif de déconnexion soit ainsi autorisé à être manoeuvré de la position de commutation en service à la position de commutation hors service sous l'effet de l'élément d'actionnement, lorsque les conditions suivantes, de façon optionnelle en combinaison avec une ou plusieurs autres conditions, sont remplies simultanément :
- la vitesse du véhicule ne dépasse pas la valeur de seuil prédéterminée,
- la fonction d'arrêt d'urgence du véhicule est activée, et
- le moteur d'entraînement du véhicule n'est pas en fonctionnement.

12. Produit de programme informatique comprenant un support de mémorisation de données lisible par une unité de commande électronique (7), un programme informatique selon l'une quelconque des revendications 9 à 11 étant mémorisé sur ledit support de mémorisation de données.

13. Unité de commande électronique (7) comprenant des moyens d'exécution (21), une mémoire (23) connectée aux moyens d'exécution et un support de mémorisation de données (24) connecté aux moyens d'exécution, un programme informatique selon l'une quelconque des revendications 9 à 11 étant mémorisé sur ledit support de mémorisation de données (24).
